# EUROPÄISCHE PATENTSCHRIFT

(11) **EP 3 710 325 B1**
(45) Veröffentlichungstag und Bekanntmachung des Hinweises auf die Patenterteilung: **17.02.2021**
(21) Anmeldenummer: 19801857.4
(22) Anmeldetag: 11.11.2019
(51) Int. Cl.: B60T 13/74

(54) **ELEKTROMECHANISCH SCHALTBARE BREMSE MIT INTEGRALER DÄMPFERSTRUKTUR**
ELECTROMECHANICALLY SWITCHABLE BRAKE HAVING INTEGRAL DAMPER STRUCTURE
FREIN À COMMANDE ÉLECTROMÉCANIQUE AVEC STRUCTURE D'AMORTISSEMENT INTÉGRALE

(30) Priorität: 13.11.2018 DE 102018008899
(43) Veröffentlichungstag der Anmeldung: 23.09.2020
(73) Patentinhaber: Chr. Mayr GmbH + Co. KG, 87665 Mauerstetten (DE)
(72) Erfinder: FICHTL, Michael, 87679 Westendorf (DE)
(74) Vertreter: Ruschke, Hans Edvard
(86) Internationale Anmeldenummer: PCT/EP2019/080815
(87) Internationale Veröffentlichungsnummer: WO 2020/099296

(56) Entgegenhaltungen:
- WO-A1-2006/033149
- CN-A- 106 838 068
- CN-B- 103 912 609
- JP-A- 2000 186 724
- JP-A- 2008 275 103

## Beschreibung

Die vorliegende Erfindung betrifft eine Ankerscheibe bzw. einen Spulenträger mit einer integralen Dämpferstruktur für Ruhestrombremsen und Arbeitsstrombremsen nach dem Oberbegriff des Hauptanspruchs. Hierbei umfassen Ruhestrombremsen vorzugsweise Reibungsbremsen wie beispielsweise elektromagnetisch lüftende Federdruckbremsen oder Permanentmagnetbremsen.

Unter Ruhestrombremsen versteht man im Allgemeinen Bremssysteme, welche ohne äußere Energiezufuhr, also beispielsweise im stromlosen Zustand ihre Bremswirkung entfalten. Arbeitsstrombremsen funktionieren nach dem gegenteiligen Prinzip. Unter Arbeitsstrombremsen versteht man demnach im Allgemeinen Bremssysteme, welche eine Energiezufuhr von außen benötigen, um ihre Bremswirkung entfalten zu können. Hierzu gehören insbesondere sogenannte Polflächenbremsen.

Ruhestrombremsen werden unter anderem in geräuschsensiblen Anwendungsgebieten eingesetzt. Zu diesen gehören beispielsweise Personenaufzüge oder Podien und Seilzüge von Theaterbühnen. Die Aufgaben der Bremsen umfassen hierbei das Halten statischer Lasten und das Verzögern unkontrollierter Fahrbewegungen in Notsituationen.

Oben beschriebene Bremsen werden im normalen Betrieb lediglich geöffnet oder geschlossen, was in einer sehr häufigen Abfolge stattfinden kann. Der Antrieb wird also entweder für eine Bewegung freigegeben oder eine statische Last wird gehalten. Das Verzögern wird im normalen Betrieb von einem geregelten Antrieb übernommen.

In einem solchen normalen Betrieb müssen die Schaltgeräusche, welche beim Öffnen und Schließen der Bremse entstehen, möglichst gering sein, so dass diese nicht störend auf ihre Umgebung wirken. Insbesondere darf das Wohl von sich in der Nähe aufhaltenden Personen nicht beeinträchtigt werden. Ebenfalls gilt es unerwünschte Schwingungen, welche zu Geräuschentwicklungen führen können, möglichst gering zu halten.

Im Falle einer Notsituation spielt das entstehende Schaltgeräusch sowie das Bremsgeräusch eine untergeordnete Rolle.

Aus dem Stand der Technik sind mehrere Möglichkeiten zur Reduktion von Schaltgeräuschen von Bremsen bekannt. So wird in der EP1423626 B1 vorgeschlagen, mehrere elastische Elemente unterschiedlicher Steifigkeit zwischen dem Spulenträger und der Ankerscheibe anzuordnen. Hierbei sollen die Elemente geringerer Steifigkeit die Ankerscheibe und gleichzeitig den Spulenträger im geöffneten und im geschlossenen Zustand der Bremse berühren. Weiter wird hier vorgeschlagen, die Vorspannung der Dämpfungselemente durch Stellschrauben veränderlich zu gestalten.

Diese Art der Geräuschdämpfung wird bevorzugt mit Elastomeren ausgeführt. Diese weisen wiederum mit der Temperatur veränderliche Steifigkeiten auf, so dass die geräuschmindernde Wirkung nur in einem eingeschränkten Temperaturbereich optimal wirkt. Zudem weisen diese Dämpfer eine relativ hohe Kraft-Hysterese zwischen Belastung und Entlastung auf.

Darüber hinaus erfordert die Justage dieses Dämpfungssystems mit Hilfe der Stellschrauben in besonderer Weise geschulte Mitarbeiter. Die Justage des Dämpfungssystems bedeutet darüber hinaus einen Zeitaufwand und auch einen finanziellen Aufwand.

In der US 9 638 272 B2 wird eine Dämpfungsplatte vorgeschlagen, welche zwischen dem Spulenträger und der Ankerscheibe angeordnet ist. Diese wird mit der Bewegung der Ankerscheibe elastisch deformiert und erzeugt so eine Dämpfungskraft.

Die Dämpfungsplatte, welche vorzugsweise aus Federstahl besteht, wird großformatig ausgeführt. Sie überdeckt einen Großteil des inneren und des äußeren Magnetpols des Spulenträgers. Da diese zwischen dem Spulenträger und der Ankerscheibe angeordnet ist, muss diese einem hohen Genauigkeits-grad in ihrer Dickengleichheit und ihrer Ebenheit entsprechen, da der Luftspalt zwischen dem Spulenträger und der Ankerscheibe gleichmäßig ausgeführt sein muss. Die Dämpfungsplatte stellt eine zusätzliche Größe in der Toleranzkette des Luftspalts dar, was die gesamte Toleranzsituation des Luftspalts verschlechtert. Ungenauigkeiten im Bereich des Luftspalts können zu einem erhöhten magnetischen Widerstand führen, was sich in einer verringerten Zugkraft im Magnetkreis äußern kann.

Nur durch eine hohe Genauigkeit kann ein gleichmäßig großer Luftspalt und so ein gelichmäßiges Abfallen beziehungsweise ein gleichmäßiges Anziehen des Ankers ermöglicht werden. Ungleichmäßigkeiten können sich in Kipp-bewegungen der Ankerscheibe äußern, welche wiederum zu erhöhten Schaltgeräuschen führen können.

In der DE 1020 17 000 846 A1 wird ein Dämpfungsblech vorgeschlagen, welches sich zwischen der Ankerscheibe und dem Spulenträger befindet. Das Dämpfungsblech weist über den Umfang verteilt mehrere Erhebungen auf, welche als abfedernde Elemente beim Lüften der Bremse fungieren sollen.

Da das Dämpfungsblech im abgefallenen Zustand der Ankerscheibe nicht unter Vorspannung steht, kann dieses das Schaltgeräusch, welches durch das Anziehen der Ankerscheibe an den Spulenträger entsteht, nicht effektiv abdämpfen.

Weiter unterliegt das Dämpfungsblech, welches als Stanz-Biegeteil ausgeführt ist, unerwünschten Ungenauigkeiten was dessen Maßhaltigkeit betrifft. Diese können sich in Form von Spalten zwischen dem Dämpfungsblech und der Ankerscheibe äußern, welche den Magnetfluss zwischen dem Spulenträger und der Ankerscheibe behindern.

Im Stand der Technik finden sich weitere Beispiele elektromagnetisch schaltbarer Bremsen und ähnlicher Vorrichtungen, die sich mit unterschiedlichen Konzepten zur Dämpfung von Schaltgeräuschen beschäftigen. Hierzu werden als weitere Beispiele folgende Patentveröffentlichungen genannt:
CN106838068A,
DE19622983C1, DE19925173A1, DE102013001899A1, DE102007025081A1 und DE1600229A.

Aufgabe der vorliegenden Erfindung ist es demnach, für eine elektromagnetisch schaltbare Bremse eine technische Verbesserung zum Stand der Technik vorzuschlagen, welche eine Dämpfung der Schaltgeräusche einer elektromagnetisch schaltbaren Bremse beschreibt, welche in einfacher Weise hergestellt und montiert werden kann. Darüber hinaus soll diese in einem möglichst großen Temperaturbereich möglichst gleichmäßig wirken.

Erfindungsgemäß wird dieses Ziel mit den Merkmalen des Hauptanspruchs erreicht. Die integrale Dämpferstruktur ist als elastische Lasche mit einer Erhöhung ausgebildet. Diese Erhöhung wird im Weiteren als Fuß bezeichnet. Pro Bremskreis können hierbei eine oder mehrere solcher elastischer Laschen vorgesehen sein. Die Laschen können sich auf der Seite der Ankerscheibe oder auf der Seite des Spulenträgers befinden und sind aus dem gleichen Bauteil wie die Ankerscheibe beziehungsweise wie der Spulenträger gefertigt. Der Fuß muss nicht zwangsläufig Teil der elastischen Lasche sein. Dieser kann auch auf dem gegenüberliegenden Bauteil ausgeführt sein. Die Höhe des Fußes ist größer als der Luftspalt der Bremse. Somit steht die Lasche immer mit dem gegenüberliegenden Bauteil in Kontakt und ist vorgespannt. Wird die Ankerscheibe in Richtung des Spulenträgers bewegt, so werden eine oder mehrere Laschen elastisch deformiert und die dabei entstehende Reaktionskraft wirkt der Bewegung der Ankerscheibe entgegen, was zu einem sanfteren Auftreffen der Ankerscheibe auf dem Spulenträger führt und somit ein leiseres Geräusch verursacht. Soll sich die Ankerscheibe vom Spulenträger weg bewegen, führt die Vorspannung der Laschen zu einer früheren Bewegung der Ankerscheibe, solange der Elektromagnet noch überproportional mehr Kraft aufweist als die vorgesehenen Druckfedern. Somit ergibt sich ebenfalls eine langsamere Bewegung der Ankerscheibe und somit ein leiseres Geräusch beim Aufschlagen dieser auf den Bremsrotor.

Da zumindest die elastische Lasche der integralen Dämpferstruktur in den Spulenträger oder in die Ankerscheibe eingearbeitet ist, besteht diese aus dem gleichen Werkstoff wie das Bauteil selbst. Ankerscheiben und Spulenträger bestehen auf Grund ihrer Funktionsweise meist aus weichmagnetischen Stählen. Diese Werkstoffe weisen im Vergleich zu Kunststoffen und Elastomeren in dem für Bremsen relevanten Temperatur-bereich (-40°C bis +120°C) eine sehr viel kleinere Änderung ihrer Steifigkeit auf. Somit wirkt die integrale Dämpferstruktur in diesem Temperaturbereich gleichmäßig.

Ebenfalls vorteilhaft ist, dass die Herstellung der integralen Dämpferstruktur, abhängig von den Bearbeitungsmaschinen und Werkzeugen, in der gleichen Aufspannung erfolgen kann wie die anderen Bearbeitungsschritte an der Ankerscheibe oder am Spulenträger. Dieser Umstand ist der Genauigkeit der integralen Dämpferstruktur zuträglich und gleichzeitig in wirtschaftlicher Hinsicht vorteilhaft.

Durch die Ausgestaltung der Länge und der Dicke der elastischen Lasche kann die Steifigkeit der integralen Dämpferstruktur an die in der Bremse vorherrschenden Kräfte angepasst werden. Die Vorspannung der integralen Dämpferstruktur lässt sich durch die Höhe des Fußes bestimmen.

Ist der Fuß der integralen Dämpferstruktur aus dem gleichen Bauteil wie die elastische Lasche gefertigt oder in das gegenüberliegende Bauteil eingearbeitet oder daran befestigt, so ist eine Justage des Dämpfungssystems im Rahmen der Montage der Bremse nicht notwendig. Der Aufwand bei der Bremsenmontage ist somit reduziert.

Ebenfalls kann eine Bohrung in die Lasche eingearbeitet sein. In diese Bohrung kann ein Stift eingepresst oder eingeklebt werden. Dieser fungiert dann als Fuß der elastischen Lasche. Über den Abstand der Stiftoberfläche zur elastischen Lasche kann wiederum die Vorspannung der integralen Dämpferstruktur voreingestellt werden.

Die elastische Lasche kann auch zunächst eben, also ohne Fuß, gefertigt werden. Dieser kann anschließend in Form eines Blechs aufgeklebt werden.

Ebenfalls ist es möglich, statt eines Fußes eine halbrunde Nut in die Lasche einzuarbeiten und in diese eine gehärtete Zylinderrolle einzulegen, welche als Fuß der elastischen Lasche fungiert. Beim Anziehen und Abfallen der Ankerscheibe kann die elastische Lasche über diese Zylinderrollen eine Abwälzbewegung ausführen, welche zu einem verringerten Verschleiß des Fußes führt.

Der Fuß einer elastischen Lasche kann auch mittels eines Prägeverfahrens hergestellt werden. Hierzu kann von einer Seite her mittels eines Stempels in die Lasche eine Vertiefung so eingeprägt werden, dass das verdrängte Material auf der gegenüberliegenden Seite in Form eines Fußes übersteht.

Auch kann eine Gewindebohrung in die Lasche eingearbeitet sein. In diesem Fall kann eine Schraube als Fuß der Lasche fungieren. Hierbei kann die Höhe des Fußes vor, während oder auch nach der Montage der Bremse eingestellt werden. Die Vorspannung ist also justierbar.

Ebenfalls ist es möglich, mit Hilfe einer in der elastischen Lasche vorgesehenen Gewindebohrung und einer eingeschraubten Schraube die elastische Lasche von ihrem Basisbauteil (Ankerscheibe oder Spulenträger) abzudrücken. In dieser Ausführungsform kann die elastische Lasche auch ohne Fuß ausgeführt werden. Der Fuß wird durch die eingestellte Deformation der elastischen Lasche gebildet.

Die nicht abschließend beschriebenen Ausführungsformen der integralen Dämpferstruktur können auf der Seite der Ankerscheibe und/oder auf der Seite des Spulenträgers ausgeführt werden. Hierbei spielt die geometrische Gestaltung der Außenkontur dieser Bauteile nur eine untergeordnete Rolle. Die integrale Dämpferstruktur kann sowohl in rechteckigen, quadratischen, dreieckigen, runden, ovalen oder auch in vieleckigen Ankerscheiben und Spulenträgern integriert werden.

Ergänzend zu der hier beschriebenen Erfindung kann die Ankerscheibe und/oder der Spulenträger zusätzlich mit einer Anschlagdämpfung ausgeführt werden. Hierbei kann es sich beispielsweise um Elastomere, Kunststoffe, Zellstoffe oder Fasermaterialien handeln. Solche Anschlagdämpfer stehen nicht unter Vorspannung und berühren im geschlossenen Zustand einer Bremse nur die Ankerscheibe oder den Spulenträger. Mit Hilfe einer solchen Anschlagdämpfung kann das Geräusch, wenn die Ankerscheibe auf den Spulenträger trifft weiter reduziert werden.

Der Vorteil der Erfindung gegenüber dem Stand der Technik besteht darin, dass die integrale Dämpferstruktur im Zuge der Fertigung der Ankerscheibe oder des Spulenträgers mit integriert werden kann. Sie kann justierbar und nicht justierbar ausgeführt werden. Im nicht justierbaren Fall vereinfacht sich die Montage der Bremse. Darüber hinaus unterliegt die integrale Dämpfer-Struktur einer geringeren Abhängigkeit von der vorherrschenden Temperatur und ermöglicht so die Anwendung in größeren Temperatur-bereichen. Darüber hinaus wurde auf empirische Weise festgestellt, dass die Kraft-Hysterese der integralen Dämpferstruktur beim Öffnen und Schließen einer Bremse verglichen zu bekannten Dämpfersystemen klein ausfällt.

Die Aufgabenstellung der Erfindung wird mit den Merkmalen des Haupt-anspruchs gelöst. Weitere vorteilhafte Details der Erfindung ergeben sich aus den Unteransprüchen sowie aus der Beschreibung der nachstehend genannten Zeichnungen, die verschiedene beispielhafte Ausführungsformen der Erfindung illustrieren. Dabei zeigen:
- **Fig. 1**: eine sogenannte Rechteckbremse,
- **Fig. 1.1**: die vorgenannte Rechteckbremse im Vollschnitt mit integraler Dämpferstruktur nach vorliegender Erfindung,
- **Fig. 1.2**: einen Detailausschnitt der Rechteckbremse mit der erfindungsgemäßen integralen Dämpferstruktur,
- **Fig. 1.3**: einen weiteren Detailausschnitt einer solchen Rechteckbremse mit leicht veränderter integraler Dämpferstruktur,
- **Fig. 2**: eine Ankerscheibe einer Rechteckbremse im Vollschnitt mit der erfindungsgemäßen integralen Dämpferstruktur,
- **Fig. 3**: einen Spulenträger einer Rechteckbremse im Vollschnitt mit integraler Dämpferstruktur,
- **Fig. 4**: drei Ankerscheiben einer Rechteckbremse mit verschiedenen Schlitzkonturen zur Ausbildung der erfindungsgemäßen Dämpferstruktur,
- **Fig. 5**: eine Ankerscheibe einer Rechteckbremse mit gerader Schlitzkontur,
- **Fig. 6**: einen Teilschnitt durch eine weitere Ankerscheibe mit integraler Dämpferstruktur mit eingesetztem Stift zur Ausbildung des Fußes,
- **Fig. 7**: eine Ankerscheibe mit erfindungsgemäßer integraler Dämpferstruktur mit einem darauf angeordneten Blech,
- **Fig. 8**: einen Teilschnitt durch eine Ankerscheibe mit der integralen Dämpferstruktur mit einer Einstellschraube darin,
- **Fig. 9**: einen Teilschnitt durch eine Ankerscheibe mit integraler Dämpferstruktur mit einer Abdrück-Schraube darin,
- **Fig. 9A**: einen Teilschnitt durch eine Ankerscheibe mit integraler Dämpferstruktur mit einem Fuß in Gestalt einer Kugel oder Rolle darin,
- **Fig. 10**: eine teilweise Seiten- und Draufsicht auf eine Ankerscheibe mit der erfindungsgemäßen integralen Dämpferstruktur in Gestalt eines Polflächenschlitzes darin,
- **Fig. 11**: eine runde Ankerscheibe mit der erfindungsgemäßen integralen Dämpferstruktur mit elastischen Umfangslaschen als offene Struktur, bei der der Schlitz in den Außenumfang mündet,
- **Fig. 12**: eine ähnliche runde Ankerscheibe mit der integralen Dämpferstruktur mit elastischen Umfangslaschen als geschlossene Struktur, bei der der Schlitz abschnittsweise parallel zum Außenumfang verläuft,
- **Fig. 13**: eine runde Ankerscheibe mit integraler Dämpferstruktur am Außenumfang in Gestalt einer umlaufenden kreisringförmigen elastischen Lasche,
- **Fig. 14 und 15**: zeigen perspektivische Darstellungen von elektromagnetisch lüftenden Federdruckbremsen in Ruhestrombauweise mit der erfindungsgemäßen integralen Dämpferstruktur, aber mit funktionaler Umkehr des internen Bewegungsablaufs, und
- **Fig. 15.1**: zeigt den Gegenstand der Fig. 15 als Vollschnitt.

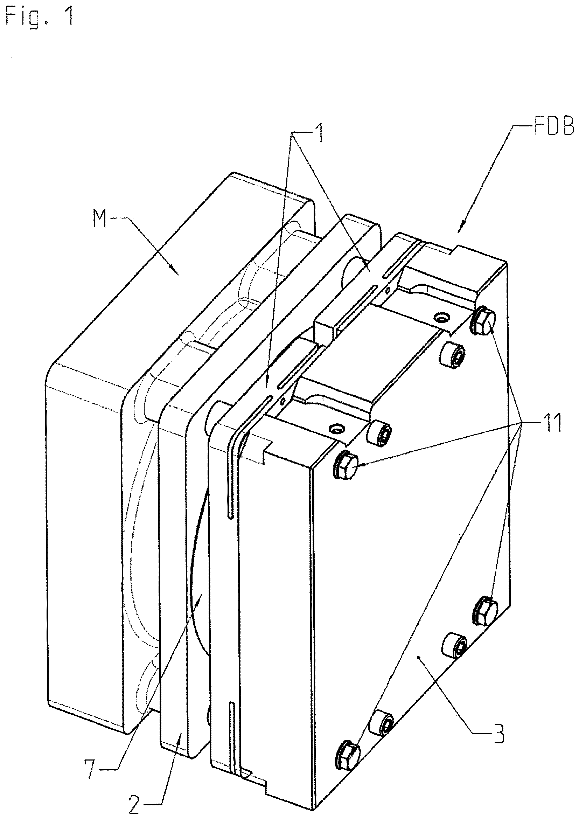

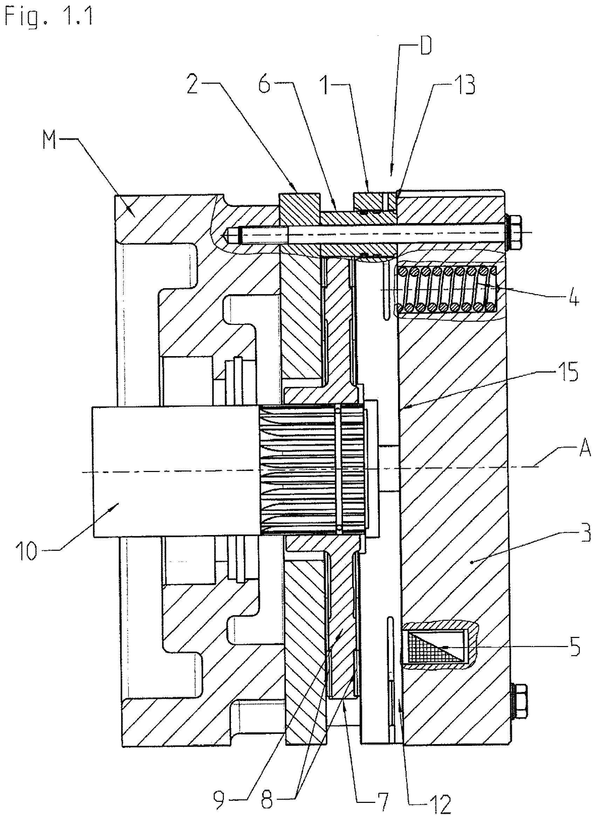

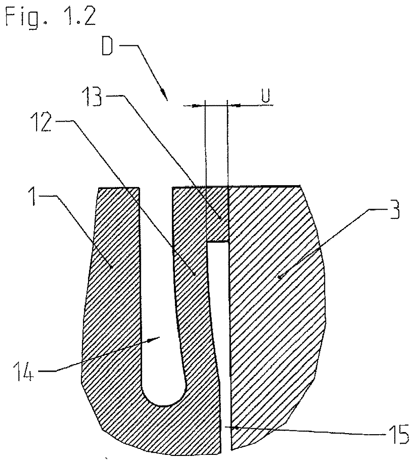

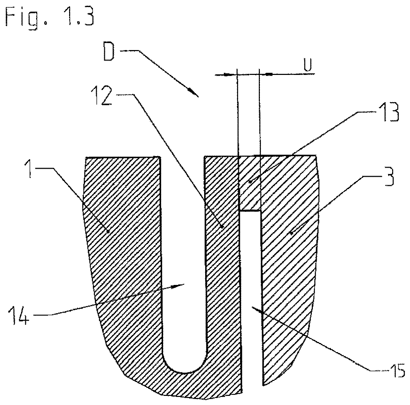

**Fig. 1** zeigt eine perspektivische Darstellung einer elektromagnetisch lüftenden Federdruckbremse (FDB) in Ruhestrombauweise, welche sich aus zwei auf den gleichen Rotor (7) wirkenden Bremskreisen zusammensetzt. Hierbei handelt es sich um eine im Bereich der Personenaufzüge übliche Bauform einer redundanten Ruhestrombremse. In der hier dargestellten Variante einer Federdruckbremse (FDB) sind dem Spulenträger (3) zwei parallel angeordnete Ankerscheiben (1) zugeordnet. Der Spulenträger (3) beinhaltet pro Ankerscheibe (1) eine separate Magnetspule (5) und separate Druckfedern (4). Im vorliegenden Beispiel ist die Federdruckbremse (FDB) unter Verwendung mehrerer Schrauben (11) mit dem Motorlagerschild (M) verschraubt. Zusätzlich ist hier eine Flanschplatte (2) zwischen dem Motorlagerschild (M) und dem Rotor (7) angeordnet.

**Fig. 1.1** stellt einen Vollschnitt mit gestuftem Verlauf durch beide der in Fig. 1 gezeigten Bremskreise dar. Der Spulenträger (3), welcher die Druckfedern (4) sowie die Magnetspulen (5) beinhaltet, ist ortsfest am Motorlagerschild (M) angebaut. Die Ankerscheiben (1) sind drehfest über Buchsen (6) geführt und können sich axial entlang der Drehachse (A) bewegen. Der Rotor (7), welcher aus einem beidseitig mit organischen Reibbelägen (8) verbundenen Reibbelagträger (9) besteht, ist drehfest mit der Welle (10) verbunden und kann um die Drehachse (A) rotieren und sich axial parallel zur Drehachse (A) bewegen. Die Flanschplatte (2) ist zwischen dem Motorlagerschild (M) und der Buchse (6) fest eingeklemmt.

Die Bremswirkung der Federdruckbremse (FDB) wird durch das Einklemmen des Rotors (7) zwischen mindestens einer Ankerscheibe (1) und der Flanschplatte (2) erzeugt. Die hierfür benötigte Axialkraft wird durch die Druckfedern (4) aufgebracht. Somit wird über den Rotor (7), welcher drehfest mit der Welle (10) verbunden ist, die Welle (10) festgehalten und an der Rotation um die Drehachse (A) gehindert.

Zum Öffnen der Federdruckbremse (FDB) werden die Magnetspulen (5) mit einer elektrischen Stromquelle verbunden. Das dadurch entstehende Magnetfeld zieht die Ankerscheiben (1) entgegen der Kraft der Druckfedern (4) in Richtung zum Spulenträger (3), so dass der Rotor (7) freigegeben und die Bremswirkung aufgehoben wird. Die Welle (10) ist somit wieder frei drehbar.

Die integrale Dämpferstruktur (D) ist hier in die Ankerscheiben (1) integriert. Diese beinhaltet die elastischen Laschen (12), welche durch Schlitze (14) in den Ankerscheiben (1) herausgearbeitet, aber dennoch mit den Anker-scheiben (1) materialschlüssig verbunden sind. Der Fuß (13) der elastischen Laschen (12) ist auf der Spulenträgerseite zugewandten Seite der elastischen Laschen (12) angeordnet.

Der Fuß (13) der elastischen Laschen (12) steht über die Ankerscheibe (1) um den Überstand (U) hinaus und ist hierbei höher ausgeführt als die Breite des Luftspalts (15). Als Luftspalt (15) wird der Abstand zwischen der Anker-scheibe (1) und dem Spulenträger (3) im stromlosen Zustand der Federdruckbremse (FDB) bezeichnet. Dieser beträgt in der Regel 0,05 mm bis 1,0 mm. Die elastische Lasche (12) steht also unter einer Vorspannung, welche eine resultierende Kraft hervorruft, welche die Ankerscheibe (1) vom Spulenträger (3) abstößt.

Die Einfederung der elastischen Lasche (12) nimmt beim Öffnen der Federdruckbremse (FDB) mit kleiner werdendem Luftspalt (15) zwischen Ankerscheibe (1) und Spulenträger (3) zu. Somit steigt die resultierende Kraft an. Durch die Gestaltung der Länge und der Dicke der elastischen Lasche (12) kann deren Steifigkeit beeinflusst werden. Gleichzeitig kann durch den Überstand (U) des Fußes (13) die Vorspannung der elastischen Lasche (12) und somit die resultierende Kraft eingestellt werden.

Die resultierende Kraft führt beim Abschalten einer elektrischen Stromquelle dazu, dass die Ankerscheibe (1) frühzeitig während des Abbaus des magnetischen Felds vom Spulenträger (3) abgestoßen wird. Die Ankerscheibe (1) setzt sich also bereits bei einer noch hohen anziehenden Kraft aus dem elektromagnetischen Feld in Bewegung. Diese Bewegung fällt vergleichsweise langsam aus, so dass das Geräusch beim Auftreffen der Ankerscheibe (1) auf dem Rotor (7) gering ausfällt.

Wird die Federdruckbremse (FDB) hingegen mit einer Stromquelle verbunden, so baut sich eine Magnetkraft auf, welche die Ankerscheibe (1) entgegen der Federkraft der Druckfedern (4) zum Spulenträger (3) zieht. Hierbei werden die elastischen Laschen (12) stärker vorgespannt, es baut sich also eine ansteigende Kraft auf, welche der Magnetkraft entgegenwirkt und die Geschwindigkeit der Ankerscheibe (1) reduziert. Hieraus resultiert ein leiseres Geräusch beim Auftreffen der Ankerscheibe (1) auf dem Spulenträger (3).

**Fig. 1****.****2** beschreibt einen Detailausschnitt aus Fig. 1.1 mit übertrieben groß dargestellter Deformation und übertrieben groß dargestelltem Luftspalt (15). Die Ankerscheibe (1) weist hier eine integrale Dämpferstruktur (D) auf. Die elastische Lasche (12) mit dem Fuß (13) ist durch den Schlitz (14) von der Ankerscheibe (1) separiert. Der Fuß (13) mit dem Überstand (U) berührt den Spulenträger (3). Dargestellt ist der geöffnete Zustand einer Federdruckbremse (FDB), die Ankerscheibe (1) wird also durch die Kraft eines Elektromagneten zum Spulenträger (3) hin angezogen. Aus dieser Kraft und der Vorspannung in der elastischen Lasche (12) ergibt sich die, in übertriebener Weise dargestellte Deformation der elastischen Lasche (12). Die Deformation führt dazu, dass der Überstand (U) größer ist als der Luftspalt (15).

**Fig. 1****.****3** beschreibt einen Detailausschnitt aus Fig. 1.1 mit übertrieben groß dargestelltem Luftspalt (15). Die Ankerscheibe (1) weist hier eine integrale Dämpferstruktur (D) mit einer elastischen Lasche (12) auf, welche durch einen Schlitz (14) von der Ankerscheibe (1) separiert ist. Der Fuß (13) befindet sich hier auf der Seite des Spulenträgers (3). Dargestellt ist der geschlossene Zustand einer Federdruckbremse (FDB), die Ankerscheibe (1) wird also von Druckfedern (4) vom Spulenträger (3) weggedrückt. In diesem Zustand ist der Überstand (U) mindestens genauso groß, wie der Luftspalt (15).

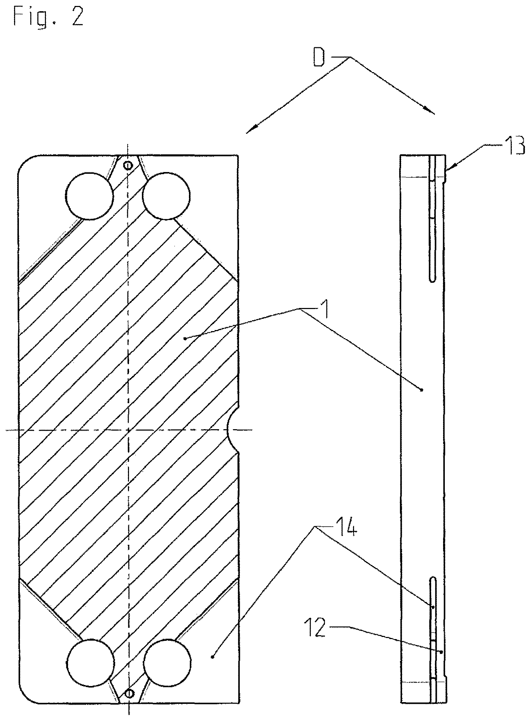

**Fig. 2** zeigt einen Schnitt durch eine Ankerscheibe (1) wie sie in Federdruck-bremsen (FDB) aus Fig. 1 und Fig. 1.1 verwendet werden kann und beinhaltet eine integrale Dämpferstruktur (D). Zu erkennen sind die an den Ecken der Ankerscheibe (1) eingearbeiteten Schlitze (14), welche die elastischen Laschen (12) mit den Füßen (13) von der restlichen Ankerscheibe (1) abgrenzen.

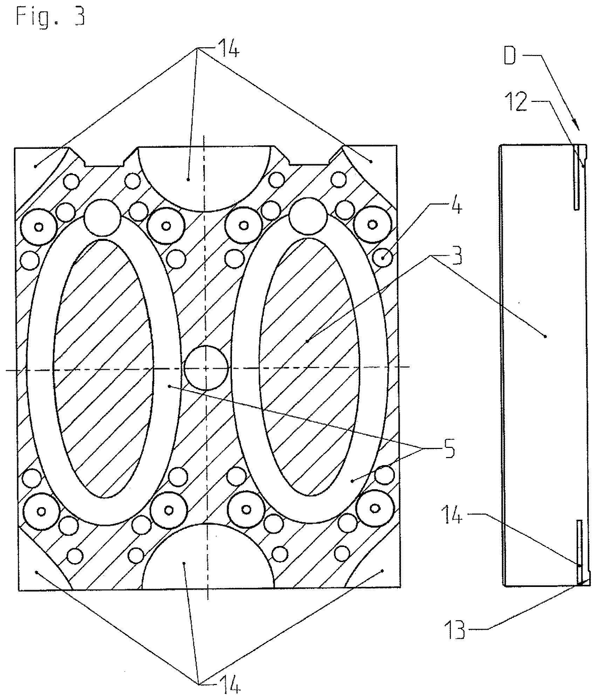

**Fig. 3** zeigt einen Schnitt durch einen Spulenträger (3) einer Federdruck-bremse (FDB) rechteckiger Bauform, wobei der Spulenträger (3) Ausnehmungen für zwei separate Magnetspulen (5) und separate Druckfedern (4) für insgesamt zwei Bremskreise aufweist. Der Spulenträger (3) beinhaltet eine integrale Dämpferstruktur (D). Sichtbar sind die Schlitze (14), welche die elastischen Laschen (12) vom restlichen Spulenträger (3) abgrenzen.

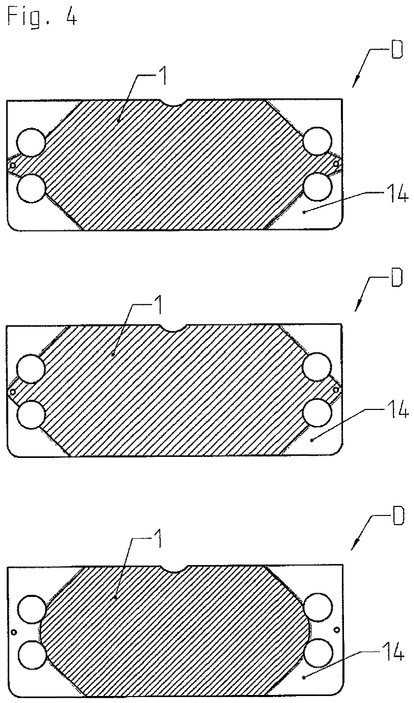

**Fig. 4** zeigt drei Ankerscheiben (1) im Schnitt, wie sie in Federdruckbremsen (FDB) aus Fig. 1 und Fig. 1.1 verwendet werden können. Diese beinhalten jeweils eine integrale Dämpferstruktur (D). Zu erkennen sind die an den Ecken der Ankerscheibe (1) eingearbeiteten Schlitze (14), welche die elastischen Laschen (12) von der restlichen Ankerscheibe (1) abgrenzen. Die Schlitze (14) weisen unterschiedliche Konturen auf. Diese können bogenförmig oder geradlinig gestaltet werden. Sie können jeweils an den Ecken der Ankerscheibe (1) eingebracht sein oder sich über eine gesamte Kante einer Ankerscheibe (1) erstrecken.

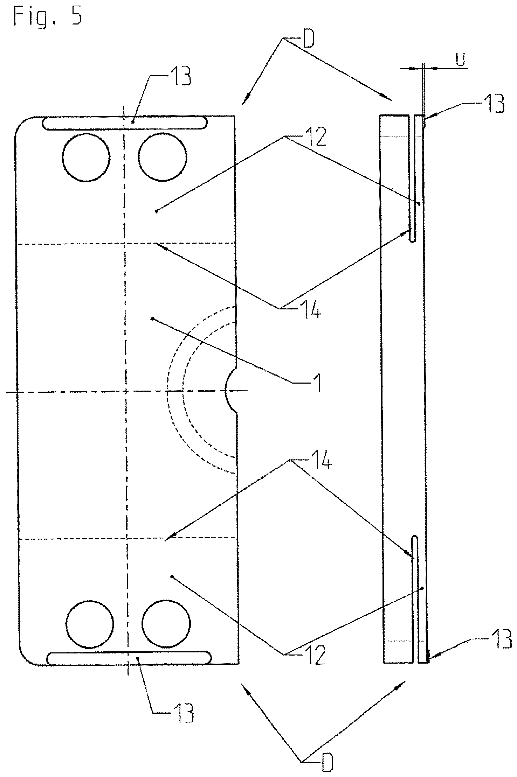

**Fig. 5** stellt eine Ankerscheibe (1) mit integraler Dämpferstruktur (D) in Vorderansicht und Seitenansicht dar. An beiden Enden der Ankerscheibe (1) ist jeweils ein Fuß (13) der elastischen Laschen (12) angeordnet. Diese befinden sich auf der Polfläche der Ankerscheibe (1) und weisen einen Überstand (U) auf. Die Schlitze (14) verlaufen planparallel zur Polfläche.

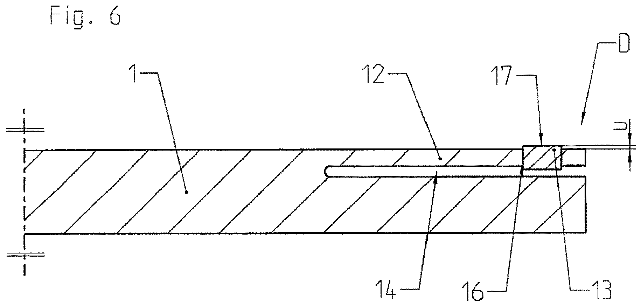

**Fig. 6** zeigt eine Ankerscheibe (1) mit integraler Dämpferstruktur (D). Auch hier separiert der Schlitz (14) die elastische Lasche (12) von der Ankerscheibe (1). Die elastische Lasche (12) bleibt jedoch stoffschlüssig mit der Anker-scheibe (1) verbunden. Die elastische Lasche (12) weist an ihrem freien Ende eine Bohrung (16) auf. In dieser befindet sich ortsfest ein eingeklebter oder eingepresster Stift (17), welcher als Fuß (13) der elastischen Lasche (12) fungiert und über die Ankerscheibe (1) um den Überstand (U) übersteht.

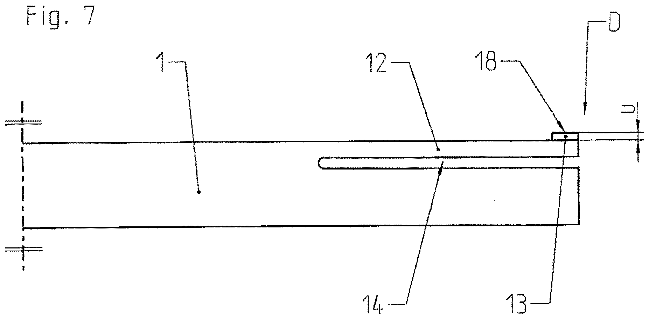

**Fig. 7** zeigt eine Ankerscheibe (1) mit integraler Dämpferstruktur (D) in einer Seitenansicht. Auch hier separiert der Schlitz (14) die elastische Lasche (12) von der Ankerscheibe (1). Die elastische Lasche (12) bleibt jedoch stoffschlüssig mit der Ankerscheibe (1) verbunden. Die elastische Lasche (12) weist an ihrem freien Ende ein Blech (18) auf. Dieses ist dort ortsfest mit der elastischen Lasche (12) per kleben, Sintern oder Schweißen verbunden und fungiert dort als Fuß (13) der elastischen Lasche (12) mit einem Überstand (U).

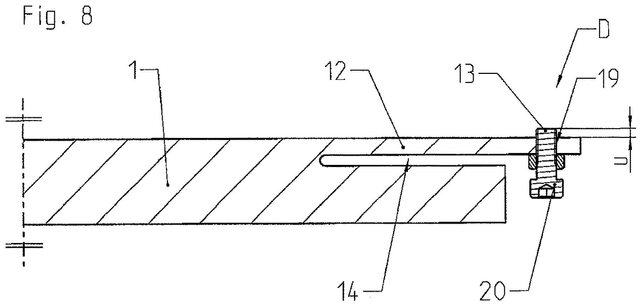

**Fig. 8** zeigt eine Ankerscheibe (1) mit integraler Dämpferstruktur (D). Auch hier separiert der Schlitz (14) die elastische Lasche (12) von der Ankerscheibe (1). Die elastische Lasche (12) bleibt jedoch stoffschlüssig mit der Anker-scheibe (1) verbunden. Die elastische Lasche (12) weist eine Gewinde-bohrung (19) auf. In diese ist eine Einstellschraube (20) eingeschraubt, welche als Fuß (13) der elastischen Lasche (12) fungiert. Über die veränderliche Position der Einstellschraube (20) kann deren Überstand (U) über die elastische Lasche und somit auch deren Überstand (U) über die Anker-scheibe (1) eingestellt werden. Auf diese Weise ist die Vorspannung der elastischen Lasche (12) in einer Federdruckbremse (FDB) einstellbar.

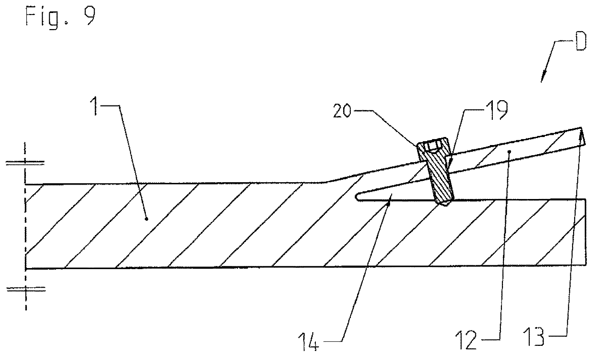

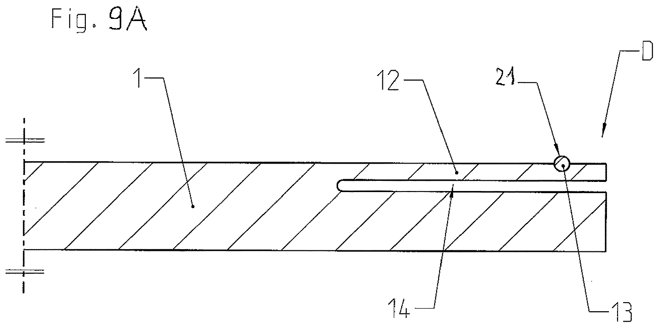

**Fig. 9** zeigt ebenfalls eine einstellbare Variante einer integralen Dämpferstruktur (D). Zur besseren Verständlichkeit ist diese hier in übertrieben großer Deformation dargestellt. Auch hier separiert ein Schlitz (14) die elastische Lasche (12) von der Ankerscheibe (1). Die elastische Lasche weist eine Gewindebohrung (19) auf in welche eine Einstellschraube (20) eingeschraubt ist. Hier kann die elastische Lasche (12) durch das Einschrauben der Einstellschraube (20) von der Ankerscheibe (1) weggedrückt werden, wodurch die elastische Lasche (12) eine Schiefstellung gegenüber der Ankerscheibe (1) erfährt. Somit ist bei dieser Variante kein eigener Fuß (13) notwendig. Die äußerste Kante der elastischen Lasche übernimmt die Funktion des Fußes (13) und berührt das gegenüberliegende Bauteil. Je weiter die Einstellschraube (20) bei dieser Variante eingeschraubt wird, desto stärker wird die elastische Lasche (12) von der Ankerscheibe (1) weggedrückt und es nimmt somit auch die Vorspannung der elastischen Lasche (12) zu. Gleichermaßen ist es auch denkbar, die Gewindebohrung (19) im Bauteil unterhalb der Lasche vorzusehen.

**Fig. 9A** zeigt eine Ankerscheibe (1) mit integraler Dämpferstruktur (D). Auch hier separiert der Schlitz (14) die elastische Lasche (12) von der Ankerscheibe (1). Die elastische Lasche (12) bleibt jedoch stoffschlüssig mit der Anker-scheibe (1) verbunden. Die elastische Lasche (12) weist an ihrem freien Ende auf der Außenseite eine Senkung auf. In dieser ist ortsfest eine Zylinderrolle (21) oder Kugel (21) eingebettet, welche als Fuß (13) der elastischen Lasche (12) fungiert.

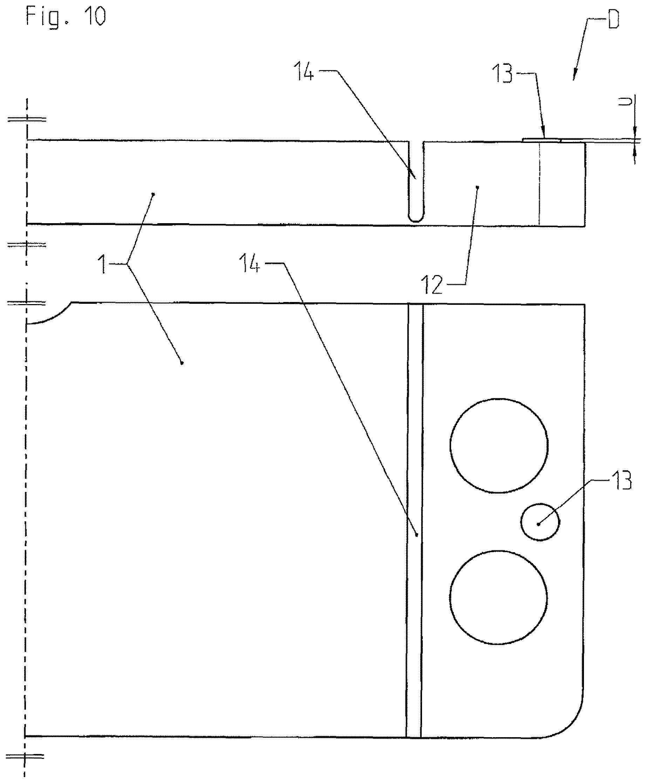

**Fig. 10** zeigt eine weitere Variante einer integralen Dämpferstruktur (D) einer Ankerscheibe (1). Hier verläuft der Schlitz (14) senkrecht zur Polfläche der Ankerscheibe (1). Die Steifigkeit der elastischen Lasche (12) wird hier nicht durch die Dicke der elastischen Lasche (12) selbst, sondern durch die Dicke des Restquerschnitts zwischen der elastischen Lasche (12) und der Ankerscheibe (1) bestimmt. Der Fuß (13) der elastischen Lasche (12) ist hier ebenfalls Teil der Ankerscheibe (1) und ist stoffschlüssig mit dieser verbunden. Vorzugsweise kann der Fuß (13) im Rahmen der Bearbeitung der Polfläche der Ankerscheibe (1) gefertigt werden.

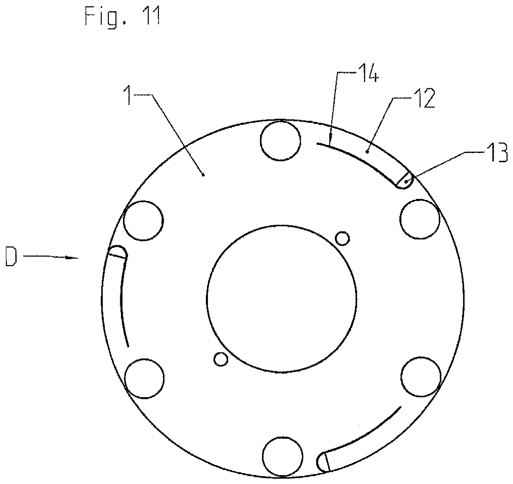

**Fig. 11** zeigt eine Ankerscheibe (1) runder Bauform mit integraler Dämpferstruktur (D). Die Schlitze (14) durchdringen hier die Ankerscheibe (1) von der Polfläche her senkrecht und vollständig. Sie beschreiben Kreisringsegmente welche einseitig mit der Ankerscheibe (1) verbunden bleiben. Die Schlitze (14) können beispielsweise per Fräsen, Erodieren, Wasserstrahl- oder Brennschneiden oder auch per Laserschneiden in die Ankerscheibe eingebracht werden. Die elastischen Laschen (12) werden auch hier durch die Schlitze (14) von der Ankerscheibe (1) separiert. Jeweils im Bereich des freien Endes einer elastischen Lasche (12) ist ein Fuß (13) angeordnet.

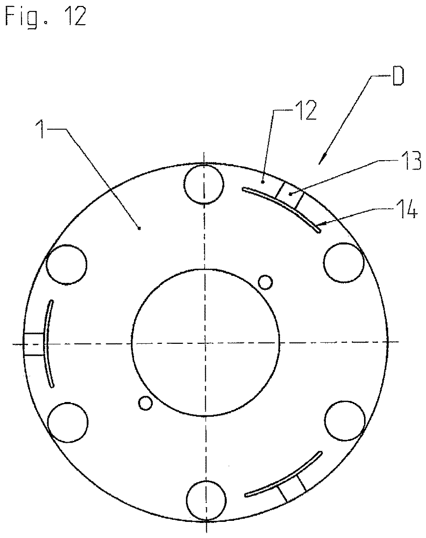

**Fig. 12** zeigt eine Ankerscheibe (1) runder Bauform mit integraler Dämpferstruktur (D). Die Schlitze (14) durchdringen auch hier die Ankerscheibe (1) von der Polfläche her senkrecht und vollständig. Die Schlitze (14) separieren hier elastische Laschen (12) in Form von Kreisring-segmenten, welche jedoch an ihren beiden Enden mit der Ankerscheibe (1) verbunden bleiben. Jeweils in der Mitte einer elastischen Lasche (12) ist ein Fuß (13) angeordnet.

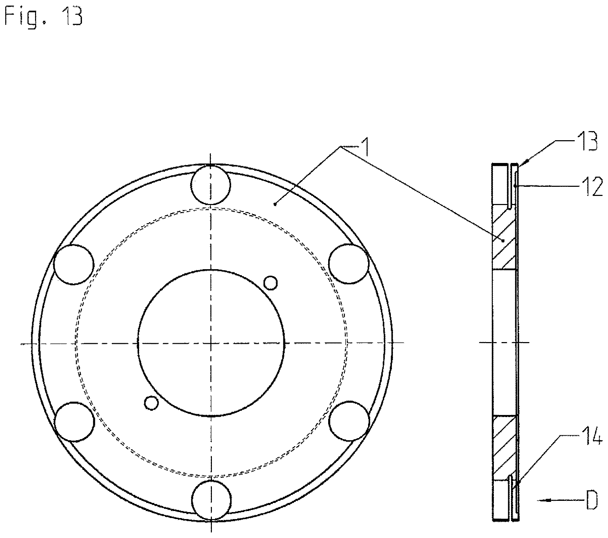

**Fig. 13** zeigt eine Ankerscheibe (1) runder Bauform mit integraler Dämpfer-struktur (D). Der Schlitz (14) verläuft auch hier parallel zur Polfläche der Ankerscheibe (1) und erstreckt sich über den gesamten Umfang. Somit ergibt sich eine umlaufende elastische Lasche (12) ähnlich einer Tellerfeder, welche bedingt durch die Gestaltung der Ankerscheibe (1) mit Durchgangs-bohrungen unterbrochen sein kann. Die umlaufende elastische Lasche (12) weist hier einen kreisringförmig umlaufenden Fuß (13) auf.

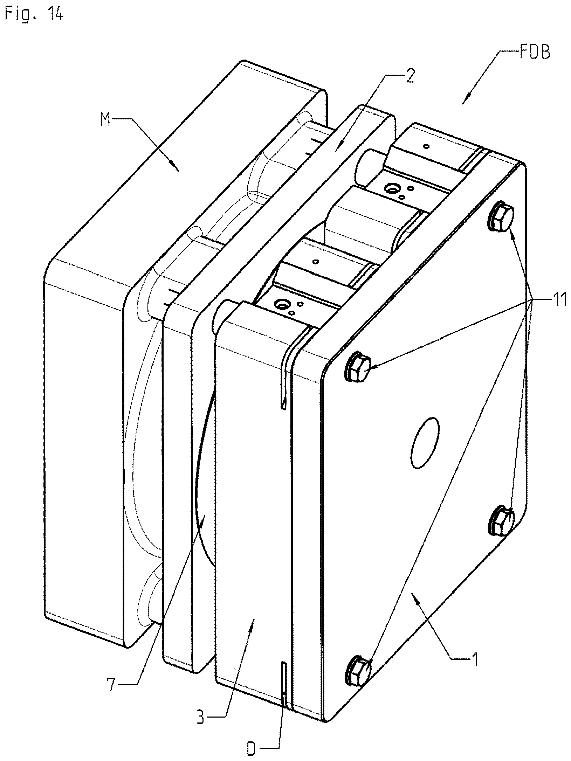

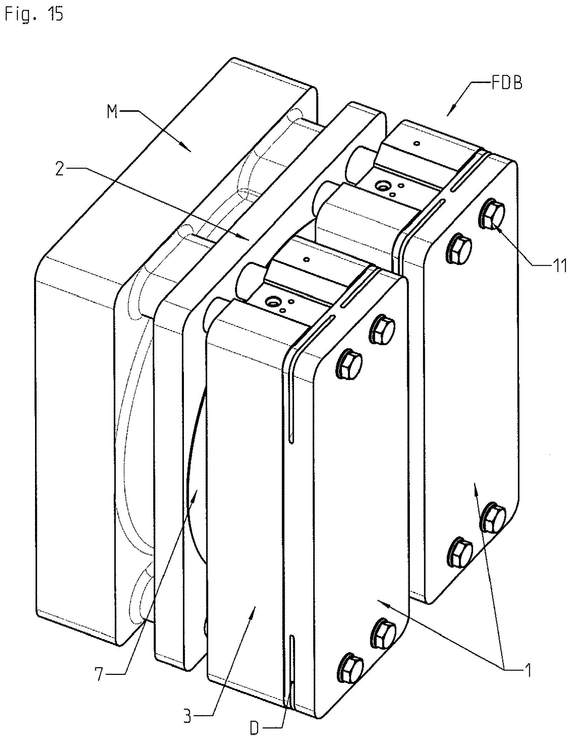

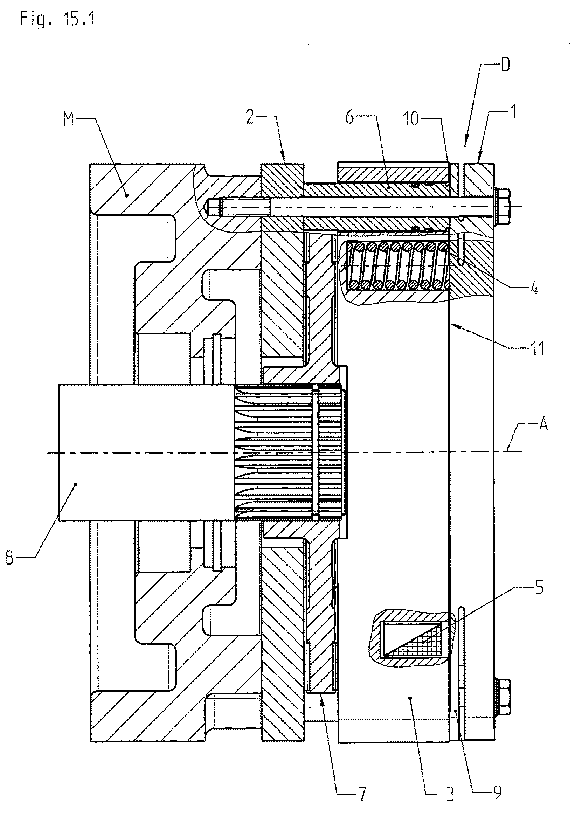

Die weiteren **Fig. 14****,** **15** und **15.1** sollen dafür sorgen klarzustellen, dass die erfindungsgemäße integrale Dämpferstruktur auch bei Bremsen mit funktionaler Umkehr des Bewegungsablaufs angewendet werden kann. Es handelt sich also um Bremsen, bei denen die Ankerscheibe starr mit dem Motorlagerschild / der Maschinenwand verbunden ist und sich der Spulenträger axial beim Öffnen und Schließen der Bremse bewegt. Der Rotor wird in diesem Fall also zwischen der Flanschplatte / dem Motorlagerschild und dem Spulenträger eingeklemmt.

**Fig. 14** zeigt eine perspektivische Darstellung einer elektromagnetisch lüftenden Federdruckbremse (FDB) in Ruhestrombauweise, welche sich aus zwei auf einen Rotor (7) wirkenden Bremskreisen zusammensetzt. In der hier dargestellten Variante der Federdruckbremse (FDB) sind der ortsfest montierten Ankerscheibe (1) zwei schwimmend gelagerte Spulenträger (3) zugeordnet. Die Spulenträger beinhalten jeweils mindestens eine Magnetspule (5) und separate Druckfedern (4). Im vorliegenden Beispiel ist die Ankerscheibe (1) unter Verwendung mehrerer Schrauben (11) mit dem Motorlagerschild (M) verschraubt. Zusätzlich ist eine Flanschplatte (2) zwischen dem Motorlagerschild (M) und dem Rotor (7) angeordnet. Wird die hier beschriebene Federdruckbremse (FDB) nicht mit elektrischer Energie versorgt, stoßen sich die Spulenträger (3) durch die Druckfedern (4) von der Ankerscheibe (1) ab, so dass der Rotor (7) zwischen den Spulenträgern (3) und der Flanschplatte (2) reibschlüssig eingeklemmt wird. In der hier beschriebenen Ausführung der Federdruckbremse (FDB) kann die integrale Dämpferstruktur (D) sowohl in den Spulenträger (3), als auch in der Ankerscheibe (1) integriert werden.

**Fig. 15** und **15.1** zeigen eine dreidimensionale Darstellung bzw. einen Längs-schnitt einer elektromagnetisch lüftenden Federdruckbremse (FDB) in Ruhestrombauweise, welche sich aus zwei auf einen Rotor (7) wirkenden Bremskreisen zusammensetzt. In der hier dargestellten Variante der Federdruckbremse (FDB) sind zwei separate ortsfest montierte Anker-scheiben (1) zwei schwimmend gelagerten Spulenträgern (3) zugeordnet. Die Spulenträger beinhalten jeweils mindestens eine Magnetspule (5) und separate Druckfedern (4). Im vorliegenden Beispiel sind die Ankerscheiben (1) unter Verwendung mehrerer Schrauben (11) mit dem Motorlagerschild (M) verschraubt. Zusätzlich ist eine Flanschplatte (2) zwischen dem Motorlagerschild (M) und dem Rotor (7) angeordnet. Wird die hier beschriebene Federdruckbremse (FDB) nicht mit elektrischer Energie versorgt, stoßen sich die Spulenträger (3) durch die Druckfedern (4) von den Ankerscheiben (1) ab, so dass der Rotor (7) zwischen den Spulenträgern (3) und der Flanschplatte (2) reibschlüssig eingeklemmt wird. In der hier beschriebenen Ausführung der Federdruckbremse (FDB) ist die integrale Dämpferstruktur (D) in den Ankerscheiben (1) integriert.

Bei der erfindungsgemäßen elektromagnetischen schaltbaren Bremse kann die mit einem Fuß (13) bestückte elastische Lasche (12) im offenen und im geschlossenen Zustand der Bremse das gegenüberliegende Bauteil berühren, oder die elastische Lasche (12) berührt das mit einem Fuß (13) bestückte gegenüberliegende Bauteil, oder die elastische Lasche (12) berührt das gegenüberliegende Bauteil direkt.

Vorzugsweise besteht die elastische Lasche (12) wie die dazugehörige Ankerscheibe bzw. der Spulenträger aus einem Eisenwerkstoff.

Bei den vorliegend beschriebenen elektromagnetisch schaltbaren Bremsen kann es sich um eine Bremse nach dem Ruhestromprinzip (FDB) handeln, bei dem bei deaktivierter Spule (5) die Ankerscheibe (1) durch eine permanent wirkende Kraft, vorzugsweise von Druckfedern (4), vom Spulenträger (3) abgestoßen wird und dadurch den mit der Welle (10) drehfest verbundenen Rotor (7) bremst. Zugleich wird bei diesem Prinzip die Ankerscheibe (1) durch die Kraft eines Elektromagneten entgegen der permanent wirkenden Kraft zum Spulenträger (3) hin angezogen.

Unabhängig von dem vorangehenden Absatz kann es sich bei der elektro-magnetisch schaltbaren Bremse auch um eine Bremse nach dem Arbeitsstromprinzip handeln, bei dem die Ankerscheibe (1) drehfest mit der Welle (10) verbunden ist und durch die Kraft eines Elektromagneten zum Spulenträger (3) hin angezogen wird.

Bei einem Spulenträger (3) oder einer Ankerscheibe (1) einer elektromagnetisch schaltbaren Bremse mit der erfindungsgemäßen integralen Dämpferstruktur (D) kann im Rahmen der Herstellung oder Bearbeitung von Spulenträger oder Ankerscheibe mindestens eine elastische Lasche (12) aus dem vorgenannten Bauteil durch ein materialtrennendes Verfahren herausgearbeitet werden.

Bei einem Spulenträger (3) oder einer Ankerscheibe (1) einer elektromagnetisch schaltbaren Bremse mit der erfindungsgemäßen integralen Dämpferstruktur (D) kann im Rahmen der Herstellung oder Bearbeitung von Spulenträger oder Ankerscheibe die Kontur der elastischen Lasche (12) auch unter Verwendung eines Laserschnitts hergestellt werden.

Auch kann die Kontur der erfindungsgemäßen elastischen Lasche (12) unter Verwendung eines Wasserstrahlschnitts oder eines Brennschnitts hergestellt werden.

Der Spulenträger (3) oder die Ankerscheibe (1) dieser erfindungsgemäßen elektromagnetisch schaltbaren Bremse können besonders kostensparend und effizient dadurch hergestellt werden, dass die Kontur der elastischen Lasche (12) im Rahmen des gleichen spangebenden Verfahrens realisiert wird, welches für die Herstellung des Spulenträgers (3) oder der Ankerscheibe (1) zur Anwendung kommt.

Bei einem Spulenträger (3) oder einer Ankerscheibe (1) einer erfindungs-gemäßen elektromagnetisch schaltbaren Bremse kann der in Rede stehende Fuß (13) auch in einem in einem Prägeverfahren hergestellt werden.

### Bezugszeichenliste:

- FDB: Federdruckbremse
- A: Drehachse
- M: Motorlagerschild
- D: integrale Dämpferstruktur
- U: Überstand
- 1: Ankerscheibe
- 2: Flanschplatte
- 3: Spulenträger
- 4: Druckfeder
- 5: Magnetspule
- 6: Buchse
- 7: Rotor
- 8: Reibbelag
- 9: Reibbelagträger
- 10: Welle
- 11: Schraube
- 12: elastische Lasche
- 13: Fuß
- 14: Schlitz
- 15: Luftspalt
- 16: Bohrung
- 17: Stift
- 18: Blech
- 19: Gewindebohrung
- 20: Einstellschraube
- 21: Zylinderrolle / Kugel

## Patentansprüche

1. Elektromagnetisch schaltbare Bremse, vorzugsweise Federdruckbremse,
- mit mindestens einem Spulenträger (3) und mindestens einer Ankerscheibe (1), wobei der axiale Abstand von Spulenträger und Ankerscheibe relativ zueinander veränderlich ist,
- mit mindestens einem Rotor (7) auf mindestens einer Nabe einer abzubremsenden Welle,
- und mit zwischen Ankerscheibe (1) und Spulenträger (3) angeordneten Dämpfungsgliedern zwischen den einander zugewandten Stirnflächen von Spulenträger (3) und Ankerscheibe (1),
**dadurch gekennzeichnet, dass** der massive Körper von Spulenträger (3) und/oder Ankerscheibe (1) eine integrale Dämpferstruktur (D) aufweist, welche sich aus mindestens einer elastischen Lasche (12) und einem Fuß (13) zusammensetzt, wobei die elastische Lasche (12) integraler Teil des massiven Körpers der Ankerscheibe (1) oder des Spulenträgers (3) ist.

2. Elektromagnetisch schaltbare Bremse nach Anspruch 1, **dadurch gekennzeichnet, dass** der massive Körper von Spulenträger (3) und/oder Ankerscheibe (1) mindestens einen eingearbeiteten Schlitz (14) aufweist, der einen Teil vom Spulenträger (3) und /oder von der Ankerscheibe (1) als die integrale federnde Dämpferstruktur (D) ausgestaltet.

3. Elektromagnetisch schaltbare Bremse nach Anspruch 2, **dadurch gekennzeichnet, dass** der Schlitz (14) vom Rand / Umfang des massiven Körpers von Spulenträger (3) und/oder Ankerscheibe (1) und/oder von einer Stirnfläche der Ankerscheibe (1, Fig. 10, 11 oder 12) ausgeht.

4. Elektromagnetisch schaltbare Bremse nach Anspruch 2 oder 3, **dadurch gekennzeichnet, dass** der Schlitz (14) mit festem oder variablem Abstand von der jeweiligen Stirnfläche bzw. vom Rand /Umfang von Ankerscheibe (1) und/oder Spulenträger (3) durch den vorgennannten massiven Körper verläuft, so dass der massive Körper von Ankerscheibe und/oder Spulenträger jeweils die auskragende federnde Lasche (12) ausbildet, die an ihrem außen liegenden Ende den Fuß (13) aufnimmt oder berührt.

5. Elektromagnetisch schaltbare Bremse nach einem der Ansprüche 2, 3 oder 4, **dadurch gekennzeichnet, dass** der Schlitz (14) parallel zur jeweiligen Stirnfläche von Ankerscheibe und/oder Spulenträger und in geringem Abstand davon verläuft.

6. Elektromagnetisch schaltbare Bremse nach einem der voranstehenden Ansprüche, **dadurch gekennzeichnet, dass** der Körper von Spulenträger (3) und/oder Ankerscheibe (1) rechteckig ausgebildet ist.

7. Elektromagnetisch schaltbare Bremse nach dem voranstehenden Anspruch 6, **dadurch gekennzeichnet, dass** der jeweilige Schlitz (14) im Eckenbereich von Ankerscheibe und/oder Spulenträger vorgesehen ist.

8. Elektromagnetisch schaltbare Bremse nach Anspruch 1, **dadurch gekennzeichnet, dass** die elastische Lasche (12) in eine Richtung parallel zur Drehachse (A) vorgespannt ist.

9. Elektromagnetisch schaltbare Bremse nach mindestens einem der vorangegangenen Ansprüche, **dadurch gekennzeichnet, dass** der Fuß (13) von einem Stift (17) gebildet wird, welcher in einer Bohrung (16) in der elastischen Lasche (12) oder in einer Bohrung (16) im gegenüberliegenden Bauteil eingebracht ist und einen Überstand (U) aufweist.

10. Elektromagnetisch schaltbare Bremse nach mindestens einem der voranstehenden Ansprüche, **dadurch gekennzeichnet, dass** der Fuß (13) von einem Blech (18) gebildet wird, welches auf der elastischen Lasche (12) oder auf dem gegenüberliegenden Bauteil angebracht ist und einen Überstand (U) aufweist.

11. Elektromagnetisch schaltbare Bremse nach einem der voranstehenden Ansprüche, **dadurch gekennzeichnet, dass** der Fuß (13) von einer Einstellschraube (20) gebildet wird, welche in einer Gewindebohrung (19) in der elastischen Lasche (12) oder in einer Gewindebohrung (19) im gegenüberliegenden Bauteil eingebracht ist und einen Überstand (U) aufweist.

12. Elektromagnetisch schaltbare Bremse nach mindestens einem der voranstehenden Ansprüche, **dadurch gekennzeichnet, dass** die elastische Lasche (12) oder das gegenüberliegende Bauteil mit einer Senkung versehen ist, in welcher eine Zylinderrolle oder eine Kugel eingebettet ist, welche als Fuß (13) fungiert.

13. Elektromagnetisch schaltbare Bremse nach einem der voranstehenden Ansprüche, **dadurch gekennzeichnet, dass** die elastische Lasche (12) oder die Ankerscheibe (1) beziehungsweise der Spulenträger (3) mit einer Gewindebohrung (19) versehen ist, in welche eine Einstellschraube (20) eingreift, mit welcher die elastische Lasche (12) von restlichen Bauteil weggedrückt werden kann.

## Claims

1. Electromagnetically switchable brake, preferably a spring loaded brake,
- with at least one coil carrier (3) and at least one armature plate (1), wherein the axial distance between the coil carrier and armature disk relative to one another is variable,
- with at least one rotor (7) on an at least one hub of a shaft to be braked,
- and with damping members arranged between the armature disk (1) and coil carrier (3) between the facing end faces of the coil carrier (3) and armature disk (1),
**characterized in that** the solid body of the coil carrier (3) and / or armature disk (1) has an integral damper structure (D) which is composed of at least one elastic tab (12) and a foot (13), wherein the elastic tab (12) is an integral part of the solid body of the armature disk (1) or of the coil carrier (3).

2. Electromagnetically switchable brake according to claim 1, **characterized in that** the solid body of the coil carrier (3) and / or armature disk (1) has at least one machined slot (14) to arrange part of the coil carrier (3) and / or of the armature disk (1) as the integral sprung damper structure (D).

3. Electromagnetically switchable brake according to claim 2, **characterized in that** the slot (14) originates from the edge / circumference of the solid body of the coil carrier (3) and / or armature disk (1) and / or from an end face of the armature disk (1, Fig. 10, 11 or 12).

4. Electromagnetically switchable brake according to claim 2 or 3, **characterized in that** the slot (14) runs from the respective end face or from the edge / circumference of the armature disk (1) and / or coil carrier (3) with a fixed or variable spacing through the aforementioned massive body, such that the massive body of the armature disk and / or coil carrier forms the cantilevered resilient tab (12) which, at its outer end, receives or touches the foot (13).

5. Electromagnetically switchable brake according to one of claims 2, 3 or 4, **characterized in that** the slot (14) runs parallel to the respective end face of the armature disk and / or coil carrier and at a small distance therefrom.

6. Electromagnetically switchable brake according to one of the preceding claims, **characterized in that** the body of the coil carrier (3) and / or armature disk (1) is rectangular.

7. Electromagnetically switchable brake according to the preceding claim 6, **characterized in that** the respective slot (14) is provided in the corner region of the armature disk and / or coil carrier.

8. Electromagnetically switchable brake according to claim 1, **characterized in that** the elastic tab (12) is prestressed in a direction parallel to the axis of rotation (A).

9. Electromagnetically switchable brake according to at least one of the preceding claims, **characterized in that** the foot (13) is formed by a pin (17) which is disposed in a bore (16) in the elastic strap (12) or in a bore (16) in the opposite component and has a protruding height (U).

10. Electromagnetically switchable brake according to at least one of the preceding claims, **characterized in that** the foot (13) is formed from sheet metal (18) which is attached to the elastic tab (12) or to the opposite component and has a protruding height (U).

11. Electromagnetically switchable brake according to one of the preceding claims, **characterized in that** the foot (13) is formed from an adjusting screw (20) which is disposed in a threaded hole (19) in the elastic tab (12) or in a threaded hole (19) in the opposite component and has a protruding height (U).

12. Electromagnetically switchable brake according to at least one of the preceding claims, **characterized in that** the elastic tab (12) or the opposite component is provided with a depression in which a cylindrical roller or a ball is embedded, which acts as a foot (13).

13. Electromagnetically switchable brake according to one of the preceding claims, **characterized in that** the elastic tab (12) or the armature disk (1) or the coil carrier (3) is provided with a threaded bore (19) into which an adjusting screw (20) engages, with which the elastic tab (12) can be pushed away from the rest of the component.

## Revendications

1. Frein à commande électromagnétique, de préférence frein à pression de ressort,
- avec au moins un support de bobine (3) et au moins un disque d'ancrage (1), sachant que la distance axiale du support de bobine et du disque d'ancrage est variable l'un par rapport à l'autre,
- avec au moins un rotor (7) sur au moins un moyeu d'un arbre à freiner,
- et avec des éléments d'amortissement disposés entre le disque d'ancrage (1) et le support de bobine (3) entre les surfaces frontales tournées l'une vers l'autre de support de bobine (3) et de disque d'ancrage (1) ,
**caractérisé en ce que** le corps massif du support de bobine (3) et/ou du disque d'ancrage (1) comporte une structure d'amortissement intégrale (D), laquelle est composée d'au moins une flasque élastique (12) et d'un pied (13), sachant que la flasque élastique (12) est une partie intégrale du corps massif du disque d'ancrage (1) ou du support de bobine (3).

2. Frein à commande électromagnétique selon la revendication 1, **caractérisé en ce que** le corps massif du support de bobine (3) et/ou du disque d'ancrage (1) comporte au moins une fente (14) aménagée, qui présente une partie du support de bobine (3) et/ou du disque d'ancrage (1) sous la forme de la structure d'amortissement intégrale à ressort (D).

3. Frein à commande électromagnétique selon la revendication 2, **caractérisé en ce que** la fente (14) part du bord/de la périphérie du corps massif du support de bobine (3) et/ou du disque d'ancrage (1) et/ou d'une surface frontale du disque d'ancrage (1, Fig. 10, 11 ou 12) .

4. Frein à commande électromagnétique selon la revendication 2 ou 3, **caractérisé en ce que** la fente (14) passe à une distance fixe ou variable de la surface frontale respective ou du bord/de la périphérie du disque d'ancrage (1) et/ou du support de bobine (3) à travers le corps massif précité de telle manière que le corps massif du disque d'ancrage et/ou du support de bobine constitue respectivement la flasque à ressort en saillie (12), qui reçoit ou touche à son extrémité extérieure le pied (13).

5. Frein à commande électromagnétique selon l'une quelconque des revendications 2, 3 ou 4, **caractérisé en ce que** la fente (14) passe parallèlement à la surface frontale respective du disque d'ancrage et/ou du support de bobine et à faible distance de ceux-ci.

6. Frein à commande électromagnétique selon l'une quelconque des revendications précédentes, **caractérisé en ce que** le corps du support de bobine (3) et/ou du disque d'ancrage (1) est constitué rectangulaire.

7. Frein à commande électromagnétique selon la revendication 6 précédente, **caractérisé en ce que** la fente respective (14) est prévue dans la zone d'angle du disque d'ancrage et/ou du support de bobine.

8. Frein à commande électromagnétique selon la revendication 1, **caractérisé en ce que** la flasque élastique (12) est précontrainte dans une direction parallèlement à l'axe de rotation (A).

9. Frein à commande électromagnétique selon au moins l'une quelconque des revendications précédentes, **caractérisé en ce que** le pied (13) est formé par une tige (17), laquelle est disposée dans un trou (16) dans la flasque élastique (12) ou dans un trou (16) dans le composant opposé et comporte une projection (U).

10. Frein à commande électromagnétique selon au moins l'une quelconque des revendications précédentes, **caractérisé en ce que** le pied (13) est formé d'une tôle (18), laquelle est disposée sur la flasque élastique (12) ou le composant opposé et comporte une projection (U).

11. Frein à commande électromagnétique selon l'une quelconque des revendications précédentes, **caractérisé en ce que** le pied (13) est formé d'une vis de réglage (20), laquelle est introduite dans un trou fileté (19) dans la flasque élastique (12) ou dans un trou fileté (19) dans le composant opposé et comporte une projection (U) .

12. Frein à commande électromagnétique selon au moins l'une quelconque des revendications précédentes, **caractérisé en ce que** la flasque élastique (12) ou le composant opposé est doté d'un lamage dans lequel est incorporé un galet cylindrique ou une sphère, qui fonctionne comme un pied (13).

13. Frein à commande électromagnétique selon l'une quelconque des revendications précédentes, **caractérisé en ce que** la flasque élastique (12) ou le disque d'ancrage (1) ou bien le support de bobine (3) est doté d'un trou fileté (19) dans lequel vient en prise une vis de réglage (20) avec laquelle la flasque élastique (12) peut être repoussée du composant restant.
